# EUROPEAN PATENT APPLICATION

(11) **EP 2 704 368 A1**
(43) Date of publication of application: **05.03.2014**
(21) Application number: 13178510.7
(22) Date of filing: 30.07.2013
(51) Int. Cl.: H04L 12/40, H04L 12/403

(54) **Information processing apparatus and controlling method**

(30) Priority: 29.08.2012 JP 2012188959
(71) Applicant: FUJITSU LIMITED, Kawasaki-shi, Kanagawa 211-8588 (JP)
(72) Inventor: Matsuura, Tsutomu, Kanagawa, 211-8588 (JP); Horiuchi, Toshihiro, Kanagawa, 211-8588 (JP); Fujii, Yuichi, Kanagawa, 211-8588 (JP); Ukai, Masaki, Kanagawa, 211-8588 (JP)
(74) Representative: HOFFMANN EITLE

(57) **Abstract**

A control circuit (215, 216) performs control to initialize a plurality of interface circuits (212-1 to 212-N, 213-1 to 213-N) connected to a communication circuit (211, 214) and each connected to each of a plurality of communication lines (222-1 to 222-N), and detects whether or not initialization of each of the interface circuits has been completed. When the control circuit detects that initialization of all of the interface circuits has been completed, the control circuit controls the communication circuit so as to start data communication via the interface circuits.

## Description

### FIELD

The embodiments discussed herein are related to an information processing apparatus and a controlling method.

### BACKGROUND

Conventionally, information processing apparatuses (computers) such as servers have utilized high-speed transmission using serial communication lines.

The high-speed transmission using serial communication lines uses, for example, a transmission scheme relying on optical cables, a transmission scheme relying on electrical signals, and a transmission scheme relying on radio communications. In all of the transmission schemes, a circuit connected to a communication line is initialized and data communication is then started.

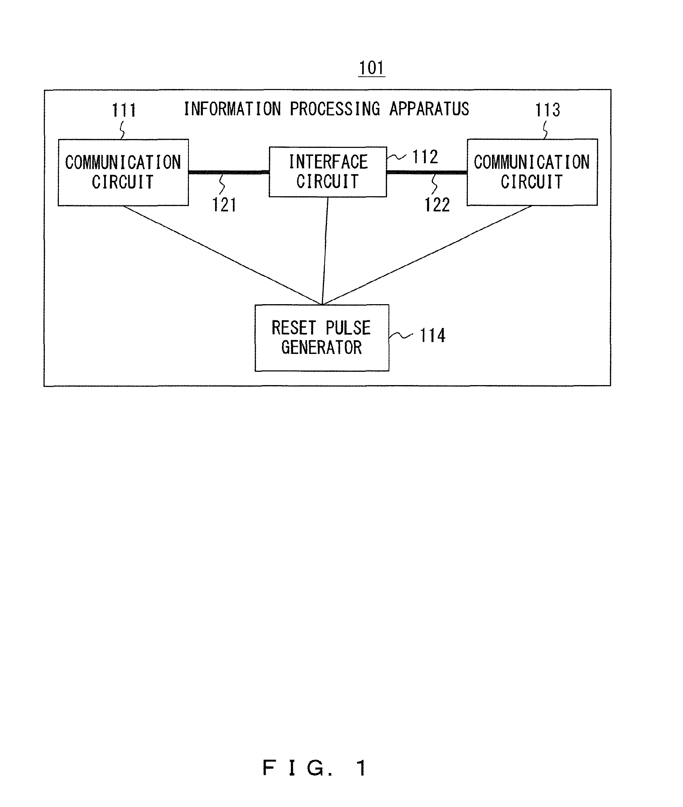

FIG. 1 illustrates an exemplary configuration of such a conventional information processing apparatus, i.e., an information processing apparatus 101. The information processing apparatus 101 in FIG. 1 includes a communication circuit 111, an interface circuit 112, a communication circuit 113, and a reset pulse generator 114. The communication circuit 111 is connected to, for example, a central processing unit (CPU), and the communication circuit 113 is connected to, for example, an input/output (10) device.

The communication circuit 111 is connected to the interface circuit 112 via a communication line 121, and the interface circuit 112 is connected to the communication circuit 113 via a communication line 122. The interface circuit 112 is, for example, a relay circuit between the communication lines 121 and 122 that amplifies a signal.

The reset pulse generator 114 outputs a reset pulse to the communication circuit 111, the interface circuit 112, and the communication circuit 113 so as to initialize these circuits. Accordingly, the communication circuits 111 and 113 recognize each other as a communication partner and start data communication.

An initialization scheme is also known wherein a circuit of each hardware part forming a signal processor is initialized when power is supplied to the hardware part (see, for example, patent document 1). In the initialization scheme, a management part generates, from information of the supplying of power, a timing signal that causes initialization of the hardware parts to be performed in a predetermined order, and the timing signal causes information required to initialize the hardware part to be supplied to the initialization circuit of each hardware part in order.

A controller for an interface circuit is also known which has a function of allowing and inhibiting access from an external device (see, for example, patent document 2). The controller controls the interface circuit into an access-inhibited state right after the controller begins to be actuated and automatically allows the access a certain time later.
Patent document 1: Japanese Laid-open Patent Publication No. 5-250072
Patent document 2: Japanese Laid-open Patent Publication No. 2002-323919

### SUMMARY

It is an object in one aspect of the invention to ensure that, during data communication using a plurality of communication lines, all of the communication lines are available.

According to an aspect of the embodiments, an information processing apparatus includes a communication circuit, a plurality of interface circuits, and a control circuit.

The communication circuit performs data communication that is at least one of data transmission and data reception. The plurality of interface circuits are connected to the communication circuit and each of the interface circuits is connected to each of a plurality of communication lines. The control circuit performs control to initialize the plurality of interface circuits and detects whether or not initialization of each of the plurality of interface circuits has been completed. When the control circuit detects that initialization of all of the plurality of interface circuits has been completed, the control circuit controls the communication circuit so as to start data communication via the plurality of interface circuits.

### BRIEF DESCRIPTION OF DRAWINGS

FIG. 1 is a configuration diagram of a conventional information processing apparatus.
FIG. 2 is a configuration diagram of a first information processing apparatus.
FIG. 3 is a flowchart of a first controlling process.
FIG. 4 is a configuration diagram of a second information processing apparatus.
FIG. 5 is a configuration diagram of a third information processing apparatus.
FIG. 6 is a flowchart of a second controlling process.
FIG. 7 is a flowchart of a third controlling process.
FIG. 8 is a flowchart of a fourth controlling process.
FIG. 9 is a flowchart of a fifth controlling process.
FIG. 10 is a flowchart of a sixth controlling process.
FIG. 11 is a flowchart of a seventh controlling process.
FIG. 12 is a configuration diagram of a fourth information processing apparatus.
FIG. 13 is a configuration diagram of a fifth information processing apparatus.

### DESCRIPTION OF EMBODIMENTS

In the following, embodiments will be described in detail with reference to the drawings.

In relation to the high performance of recent information processing apparatuses, two communication circuits may communicate data by simultaneously using a plurality of serial communication lines. In this case, a plurality of interface circuits, i.e., as many interface circuits as correspond to the number of the serial communication lines, are provided between the two communication circuits. When the timings at which initialization of the two communication circuits and the plurality of interface circuits is completed are different, some serial communication lines may become unavailable.

As an example, assume that first and second communication circuits are connected via first and second communication lines and that first and second interface circuits are respectively provided on the first and second communication lines. Further assume that, upon activating of the information processing apparatus, initialization of the first and second communication circuits and the first and second interface circuits has been completed in the following order.
time t1: initialization of the first interface circuit is completed.
time t2: initialization of the first and second communication circuits is completed.
time t3: initialization of the second interface circuit is completed.

At t2, initialization of the second interface circuit has not been completed, so the first and second communication circuits may determine that the second communication line is unavailable and thus may perform fallback to use only the first communication line. Thus, even though the second interface circuit is being normally operated and the second communication line is available, the second communication line may possibly be unused. Accordingly, it is desirable to ensure that all of the communication lines are used.

Such a problem occurs not only for information processing apparatuses that communicate data using serial communication lines but also for information processing apparatuses that communicate data using parallel communication lines.

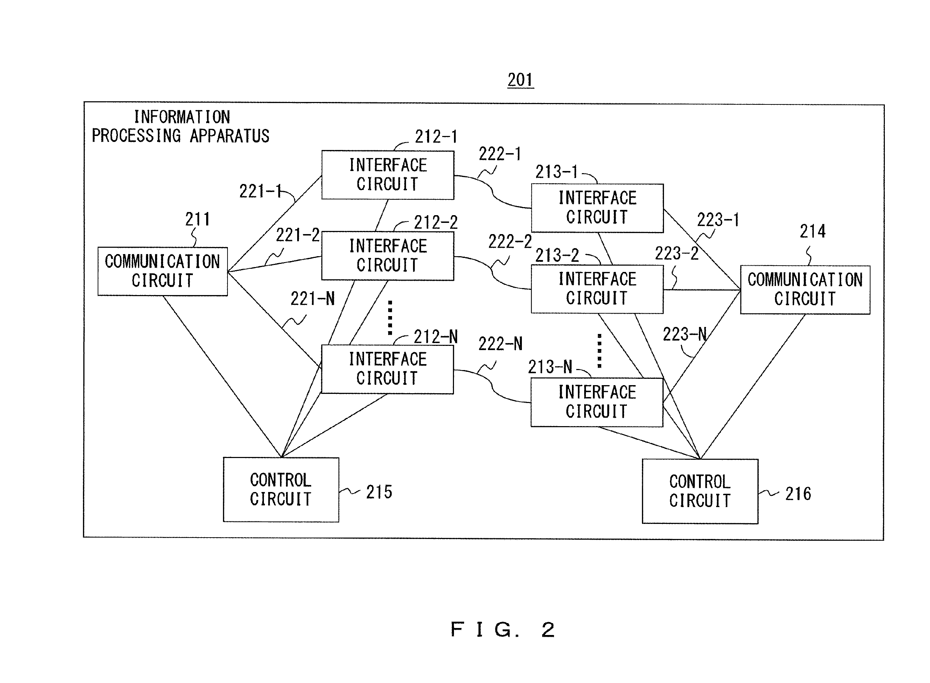

FIG. 2 illustrates an exemplary configuration of an information processing apparatus 201 in accordance with an embodiment. The information processing apparatus 201 in FIG. 2 includes a communication circuit 211, interface circuits 212-1 to 212-N (N is an integer that is two or greater), interface circuits 213-1 to 213-N, a communication circuit 214, a control circuit 215, and a control circuit 216.

The communication circuit 211 is connected to the interface circuits 212-1 to 212-N via communication lines 221-1 to 221-N. The interface circuits 212-1 to 212-N are connected to the interface circuits 213-1 to 213-N via communication lines 222-1 to 222-N. The interface circuits 213-1 to 213-N are connected to the communication circuit 214 via the communication lines 223-1 to 223-N.

The communication circuits 211 and 214 perform data communication that is at least one of data transmission and data reception. When the communication circuit 211 transmits data, the communication circuit 214 receives the data; when the communication circuit 214 transmits data, the communication circuit 211 receives the data.

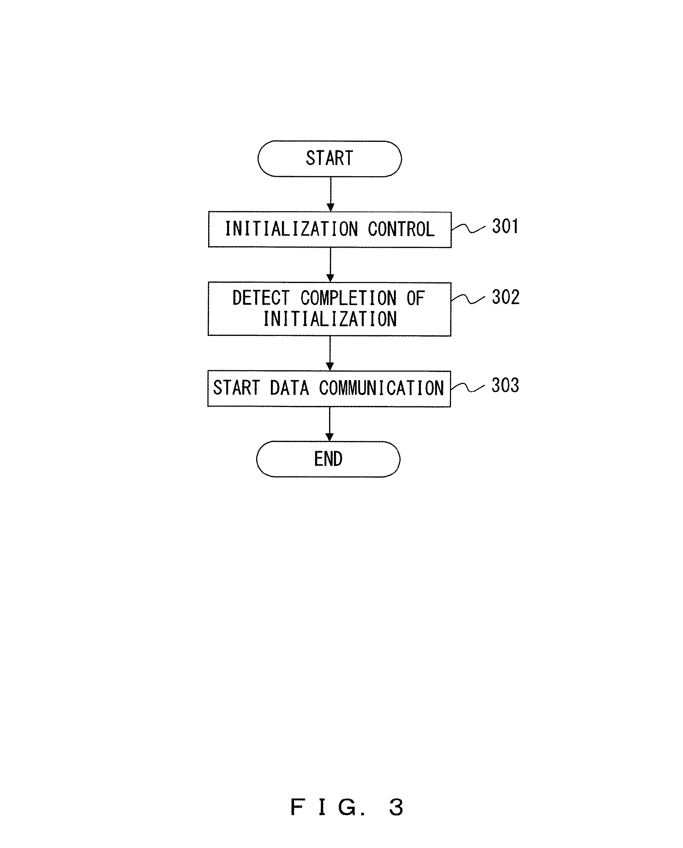

FIG. 3 is a flowchart illustrating an example of a controlling process performed by the control circuits 215 and 216 in FIG. 2.

The control circuit 215 performs control to initialize the interface circuits 212-1 to 212-N (step 301) and detects whether or not initialization of each of the interface circuits has been completed (step 302). Detecting that initialization of all of the interface circuits 212-1 to 212-N has been completed, the control circuit 215 controls the communication circuit 211 so as to start data communication via the interface circuits (step 303).

The control circuit 216 performs control to initialize the interface circuits 213-1 to 213-N (step 301) and detects whether or not initialization of each of the interface circuits has been completed (step 302). Detecting that initialization of all of the interface circuits 213-1 to 213-N has been completed, the control circuit 216 controls the communication circuit 214 so as to start data communication via the interface circuits (step 303).

An information processing apparatus such as the information processing apparatus 201 may ensure that all communication lines are used in performing data communication using the communication lines 222-1 to 222-N.

The controlling process by the control circuit 215 and the controlling process by the control circuit 216 are independently performed; any one of the two controlling processes may be started prior to the other, and any one of the two may end prior to the other. In this case, even when the communication line 222-i (i=1 to N) is a long cable and an apparatus that includes the communication circuit 211 and the interface circuit 212-i is distant from an apparatus that includes the communication circuit 214 and the interface circuit 213-i, synchronous control does not need to be performed on the two apparatuses. Thus, without depending on the length of the communication lines 222-1 to 222-N, it may be ensured that all of the communication lines are used.

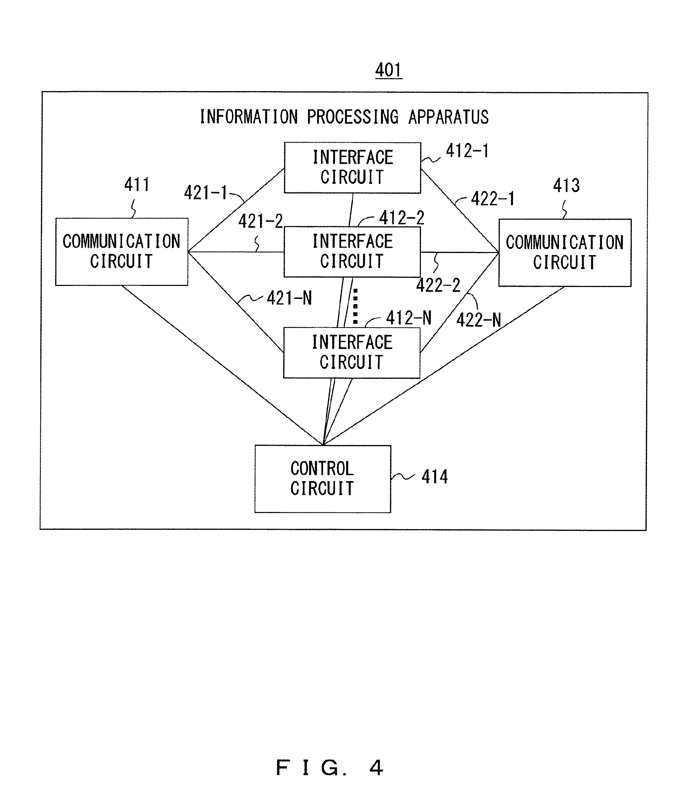

FIG. 4 illustrates an exemplary configuration of an information processing apparatus 401 in accordance with another embodiment. The information processing apparatus 401 in FIG. 4 includes a communication circuit 411, interface circuits 412-1 to 412-N (N is an integer that is two or greater), a communication circuit 413, and a control circuit 414.

The communication circuit 411 is connected to the interface circuits 412-1 to 412-N via communication lines 421-1 to 421-N. The interface circuits 412-1 to 412-N are connected to the communication circuit 413 via communication lines 422-1 to 422-N.

The communication circuits 411 and 413 perform data communication that is at least one of data transmission and data reception. When the communication circuit 411 transmits data, the communication circuit 413 receives the data; when the communication circuit 413 transmits data, the communication circuit 411 receives the data.

As with the control circuits 215 and 216 in FIG. 2, the control circuit 414 in FIG. 4 performs the controlling process illustrated in FIG. 3.

The control circuit 414 performs control to initialize the interface circuits 412-1 to 412-N (step 301) and detects whether or not initialization of each of the interface circuits has been completed (step 302). Detecting that initialization of all of the interface circuits 412-1 to 412-N has been completed, the control circuit 414 controls the communication circuits 411 and 413 so as to start data communication via the interface circuits (step 303).

An information processing apparatus such as the information processing apparatus 401 may ensure that all communication lines are used in performing data communication using the communication lines 421-1 to 421-N and 422-1 to 422-N.

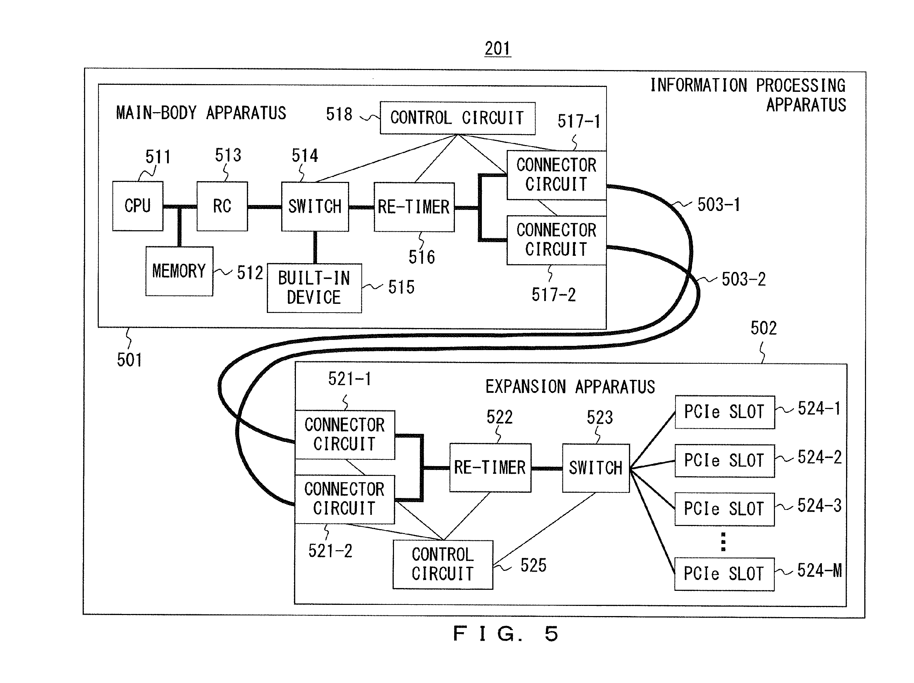

FIG. 5 illustrates a specific exemplary configuration of the information processing apparatus 201 illustrated in FIG. 2. The information processing apparatus 201 in FIG. 5 includes a main-body apparatus 501 and an expansion apparatus 502. Data communication is performed between the main-body apparatus 501 and the expansion apparatus 502 via serial communication lines of Peripheral Components Interconnect Express (PCIe).

The main-body apparatus 501 includes a CPU 511 (a processor), a memory 512, a route complex (RC) 513, a switch 514, a built-in device 515, a re-timer 516, a connector circuit 517-1, a connector circuit 517-2, and a control circuit 518.

The expansion apparatus 502 includes a connector circuit 521-1, a connector circuit 521-2, a re-timer 522, a switch 523, PCIe slots 524-1 to 524-M (M is an integer that is two or greater), and a control circuit 525.

For example, the CPU 511, the RC 513, the switch 514, and the re-timer 516 correspond to the communication circuit 211 in FIG. 2, and the re-timer 522 and the switch 523 correspond to the communication circuit 214. In this case, the connector circuits 517-1 and 517-2 correspond to the interface circuits 212-1 and 212-2. The connector circuits 521-1 and 521-2 correspond to the interface circuits 213-1 and 213-2.

QSFP cables 503-1 and 503-2 correspond to the communication lines 222-1 and 222-2. Control circuits 518 and 525 respectively correspond to the control circuits 215 and 216.

The RC 513 is connected to the CPU 511, the memory 512, and the switch 514 and transfers data between the CPU 511 or the memory 512 and the switch 514. The switches 514 and 523 are relay circuits to increase the number of PCIe ports and transfer a received packet to a corresponding port according to a destination of the packet.

The built-in device 515 and the re-timer 516 are connected to the switch 514. The built-in device 515 is, for example, a hard disk drive or an 10 device. Meanwhile, the PCIe slots 524-1 to 524-M are connected to the switch 523. A hard disk drive, an 10 device, and so on are connected to the PICe slot 524-j (j=1 to M).

The re-timers 516 and 522, which are circuits to generate an outbound signal using a clock different from that for a received signal, may perform two-way full-duplex communication. The re-timers 516 and 522 perform a relay in a Physical Coding Sublayer (PCS) of the physical layer. The re-timers 516 and 522 may perform a relay in a Media Access Control (MAC) layer.

The switch 514 and the connector circuits 517-1 and 517-2 are connected to the re-timer 516, and the switch 523 and the connector circuits 521-1 and 521-2 are connected to the re-timer 522. The connector circuit 517-1 is connected to the connector circuit 521-1 via the cable 503-1, and the connector circuit 517-2 is connected to the connector circuit 521-2 via the cable 503-2.

The re-timers 516 and 522 perform a handshake via the cables 503-1 and 503-2 so as to perform a link-up control of the communication line.

The cable 503-i (i=1, 2) includes one or more lanes, and one lane is composed of two signal lines for a transmission differential signal and two signal lines for a reception differential signal. The cable 503-i is an electric cable through which electrical signals are transmitted or an optical fiber cable through which optical signals are transmitted.

The connector circuit 517-i is an interface circuit that relays signals transmitted or received between the re-timer 516 and the cable 503-i, and the connector circuit 521-i is an interface circuit that relays signals transmitted or received between the re-timer 522 and the cable 503-i.

Until initialization is completed, the connector circuits 517-i and 521-i are in what is called an unsettled state, in which the re-timer 516 does not recognize a signal transmitted from the re-timer 522 and the re-timer 522 does not recognize a signal transmitted from the re-timer 516. After initialization is normally completed, the connector circuits 517-i and 521-i may relay a transmitted or received signal. The connector circuits 517-i and 521-i include an initialization completion register that stores information indicating whether or not initialization has been completed.

When the cable 503-i is an optical fiber cable that includes four lanes, Quad Small Form-factor Pluggable (QSFP) connectors may be used as the connector circuits 517-i and 521-i. In this case, each cable corresponds to a communication line of a x4 link, and a x8 link is achieved by using two cables in parallel.

The QSFP connector includes a converting element that converts an electrical signal into an optical signal, a converting element that converts an optical signal into an electrical signal, and a control unit that controls the converting elements. After the control unit normally completes initialization, the QSFP connector may relay a transmitted or received signal.

The control circuits 518 and 525 are, for example, microprocessors or microcontrollers. The control circuit 518 controls the switch 514, the re-timer 516, and the connector circuits 517-1 and 517-2 via a control bus. Meanwhile, the control circuit 525 controls the switch 523, the re-timer 522, and the connector circuits 521-1 and 521-2 via a control bus.

For data communication between the main-body apparatus 501 and the expansion apparatus 502, instead of PCIe, another serial communication line such as Infiniband may be used, or a parallel communication line may be used.

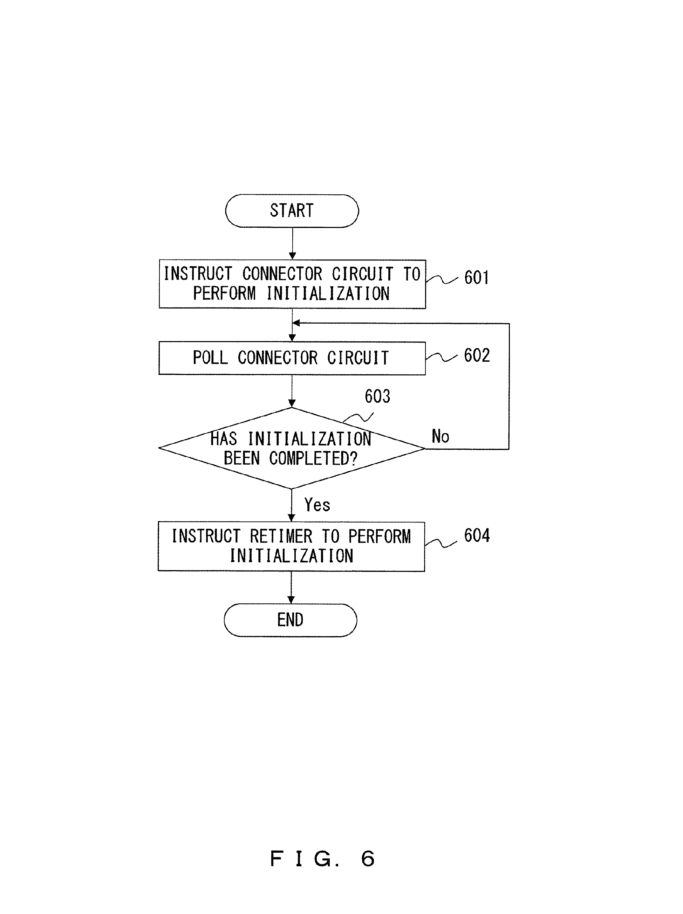

FIG. 6 is a flowchart illustrating an example of a controlling process performed by the control circuits 518 and 525 in FIG. 5. The controlling process in FIG. 6 is started after the main-body apparatus 501 and the expansion apparatus 502 are turned on.

First, the control circuit 518 instructs the connector circuits 517-1 and 517-2 to perform initialization (step 601). Accordingly, the connector circuits 517-1 and 517-2 perform initialization and store information indicating that initialization has been completed in the initialization completion register.

Next, the control circuit 518 polls the initialization completion register of each connector circuit (step 602) so as to detect whether or not initialization of each connector circuit has been completed (step 603).

The control circuit 518 reads information stored in the initialization completion register of the connector circuit 517-i at certain time intervals, and, when the information indicates that initialization has been completed, the control circuit 518 detects that initialization of the connector circuit 517-i has been completed. Meanwhile, when the information read from the initialization completion register of the connector circuit 517-i indicates that initialization has not been completed, the control circuit 518 detects that initialization of the connector circuit 517-i has not been completed.

When the control circuit 518 detects that initialization of any of the connector circuits has not been completed (No in step 603), the control circuit 518 repeats the process of step 602. Meanwhile, when the control circuit 518 detects that initialization of both of the connector circuits has been completed (Yes in step 603), the control circuit 518 instructs the re-timer 516 to perform initialization (step 604).

Accordingly, the re-timer 516 performs initialization so that data communication via the connector circuits 517-1 and 517-2 can be started. The timing at which the switch 514 is initialized may be simultaneous with the controlling process in FIG. 6 or may be before or after the controlling process in FIG. 6.

The control circuit 525 instructs the connector circuits 521-1 and 521-2 to perform initialization (step 601). Next, the control circuit 525 polls the initialization completion register of each connector circuit (step 602) so as to detect whether or not initialization of each connector circuit has been completed (step 603).

When the control circuit 525 detects that initialization of any of the connector circuits has not been completed (No in step 603), the control circuit 525 repeats the process of step 602. Meanwhile, when the control circuit 525 detects that initialization of both of the connector circuits has been completed (Yes in step 603), the control circuit 525 instructs the re-timer 522 to perform initialization (step 604).

Accordingly, the re-timer 522 performs initialization so that data communication via the connector circuits 521-1 and 521-2 can be started. The timing at which the switch 523 is initialized may be simultaneous with the controlling process in FIG. 6 or may be before or after the controlling process in FIG. 6.

In such a controlling process, the initialization completion registers of the connector circuits are polled to detect whether or not initialization has been completed, and the re-timers are initialized after the initialization of both of the connector circuits is completed. Thus, the re-timers may detect that both of the connector circuits can relay a transmitted or received signal, and data communication may be performed using both of the connector circuits.

The controlling process by the control circuit 518 and the controlling process by the control circuit 525 are independently performed; any one of the two controlling processes may be started prior to the other, and any one of the two may end prior to the other.

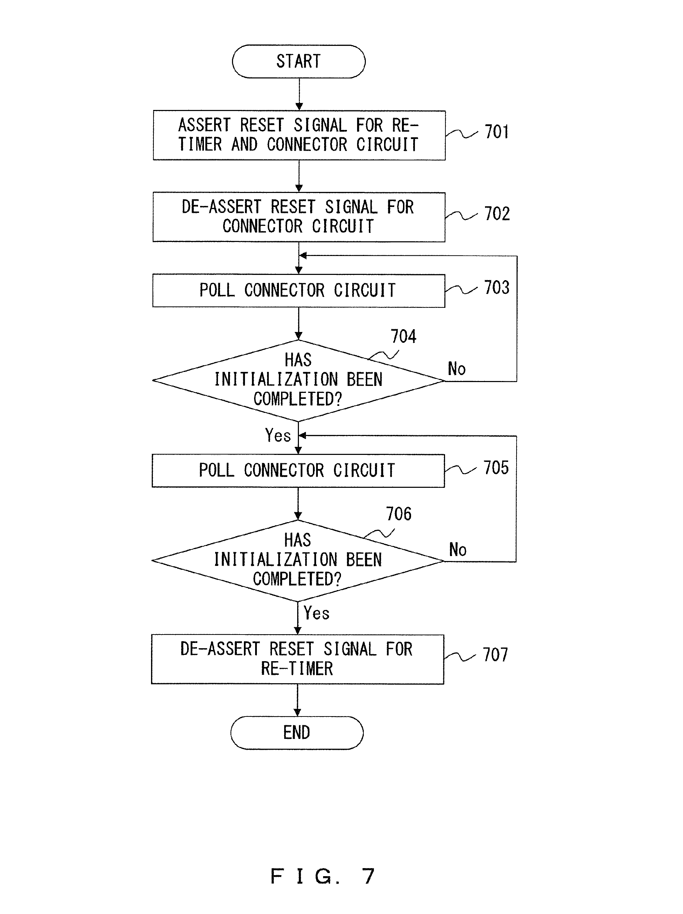

FIG. 7 is a flowchart illustrating a specific example of the controlling process in FIG. 6. First, the control circuit 518 asserts a reset signal for the re-timer 516 and the connector circuits 517-1 and 517-2 (step 701) and de-asserts a reset signal for the connector circuits 517-1 and 517-2 (step 702).

Accordingly, the re-timer 516 is put in an initialization-waiting state, and the connector circuits 517-1 and 517-2 start initialization.

Next, the control circuit 518 polls the initialization completion register of the connector circuit 517-1 (step 703) so as to detect whether or not initialization of the connector circuit 517-1 has been completed (step 704).

When the control circuit 518 detects that initialization of the connector circuit 517-1 has not been completed (No in step 704), the control circuit 518 repeats the process of step 703. Meanwhile, when the control circuit 518 detects that initialization of the connector circuit 517-1 has been completed (Yes in step 704), the control circuit 518 polls the initialization completion register of the connector circuit 517-2 (step 705). The control circuit 518 detects whether or not initialization of the connector circuit 517-2 has been completed (step 706).

When the control circuit 518 detects that initialization of the connector circuit 517-2 has not been completed (No in step 706), the control circuit 518 repeats the process of step 705. Meanwhile, when the control circuit 518 detects that initialization of the connector circuit 517-2 has been completed (Yes in step 706), the control circuit 518 de-asserts a reset signal for the re-timer 516 (step 707).

Accordingly, the re-timer 516 starts initialization so that data communication via the connector circuits 517-1 and 517-2 can be started.

The controlling process by the control circuit 525 of the expansion apparatus 502 is similar to the controlling process by the control circuit 518 of the main-body apparatus 501.

In the meantime, in some cases, initialization of the connector circuit 517-i is not advanced due to, for example, failure of the connector circuit 517-i, so the initialization is never completed. In this case, if the control circuit 518 or 525 continues polling, the information processing apparatus is not activated. Accordingly, when the initialization of the connector circuit has not been completed after a certain time period elapses, the polling is desirably terminated to shift to the following process.

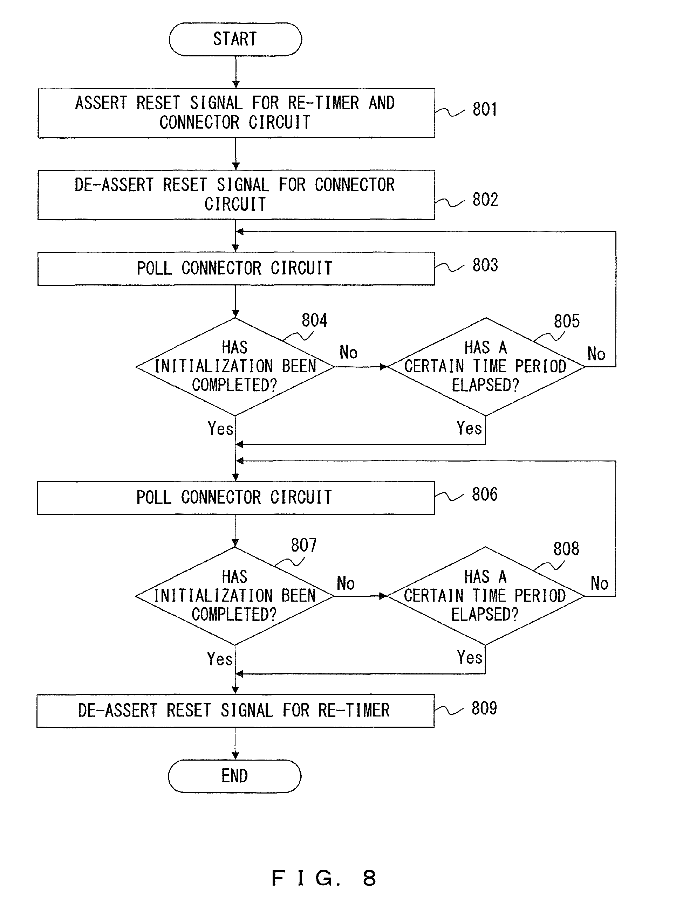

FIG. 8 is a flowchart illustrating an example of a controlling process to halt polling after a certain time period elapses. The processes of steps 801 to 804 and steps 806, 807 and 809 in FIG. 8 are similar to the processes of steps 701 to 707 in FIG. 7.

When the control circuit 518 detects in step 804 that initialization of the connector circuit 517-1 has not been completed (No in step 804), the control circuit 518 checks whether or not a certain time period has elapsed after the polling started (step 805). When the certain time period has not elapsed (No in step 805), the control circuit 518 repeats the process of step 803.

Meanwhile, when the certain time period has elapsed (Yes in step 805), the control circuit 518 polls the initialization completion register of the connector circuit 517-2 (step 806), as in the case of a situation in which initialization of the connector circuit 517-1 has been completed.

When the control circuit 518 detects in step 807 that initialization of the connector circuit 517-2 has not been completed (No in step 807), the control circuit 518 checks whether or not a certain time period has elapsed after the polling started (step 808). When the certain time period has not elapsed (No in step 808), the control circuit 518 repeats the process of step 806.

Meanwhile, when the certain time period has elapsed (Yes in step 808), the control circuit 518 de-asserts a reset signal for the re-timer 516 (step 809), as in the case of a situation in which initialization of the connector circuit 517-2 has been completed.

Accordingly, the re-timer 516 performs initialization so as to check whether or not the connector circuits 517-1 and 517-2 are available. When initialization of one of the connector circuits has not been completed, the re-timer 516 determines that this one connector circuit is not available and performs fallback to use only the other connector circuit. When initialization of neither of the connector circuits has been completed, the re-timer 516 determines that both of the connector circuits are unavailable and performs an error process that corresponds to total failure.

The certain time period used in steps 805 and 808 may be, for example, a time period that is sufficiently longer than the time required to complete initialization of the connector circuit. The controlling process by the control circuit 525 of the expansion apparatus 502 is similar to the controlling process by the control circuit 518 of the main-body apparatus 501.

Such a controlling process forcibly ends polling when a certain time period elapses after the polling started, so that the information process apparatus can be activated even when any of the connector circuits fails.

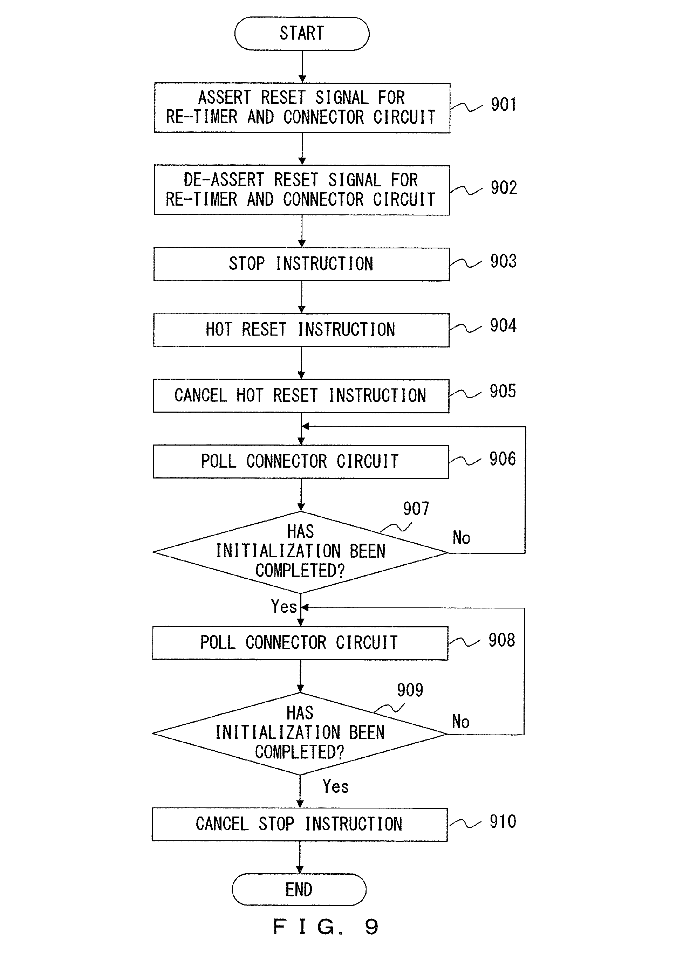

FIG. 9 is a flowchart illustrating another specific example of the controlling process illustrated in FIG. 6. In the controlling process in FIG. 9, initialization of the re-timers 516 and 522 is controlled using state transitions at PCIe. After the re-timers 516 and 522 are reset, the re-timers 516 and 522 make state transitions in the following order and complete initialization.
(1) Detect state: a state in which the re-timer confirms an electrical connection to a communication partner (checks whether or not the power has been turned on). When the re-timer confirms an electrical connection to a communication partner, the re-timer transitions to the following state.
(2) Polling state: a state in which the re-timer establishes transmission in a PCS layer with a communication partner. When a plurality of lanes are present, the re-timer establishes symbol transmission for each lane. In transitioning to a Configuration state, those lanes that cannot establish symbol transmission in a certain time period are identified as unavailable lanes.
(3) Configuration state: a state in which the re-timer establishes a link in a MAC layer with a communication partner. When a plurality of lanes are present, according to whether all of the lanes are available or only some of them are available, the re-timer activates as many lanes as can be stably used. The re-timer also sets a speed if the speed can be adjusted.
(4) L0 state: an operation state in which the re-timer performs data communication with a communication partner. Before this state is achieved, initialization has already been completed.

First, the control circuit 518 asserts a reset signal for the re-timer 516 and the connector circuits 517-1 and 517-2 (step 901). Then, the control circuit 518 de-asserts a reset signal for the re-timer 516 and the connector circuits 517-1 and 517-2 (step 902).

Accordingly, the re-timer 516 and the connector circuits 517-1 and 517-2 all start initialization.

Next, to stop the re-timer 516 in the Detect state, the control circuit 518 issues a stop instruction to the re-timer 516 (step 903). As a result, the re-timer 516, which has started initialization, stops in the Detect state, i.e., a state in the process of performing initialization.

However, due to a delay in issuance of the stop instruction from the control circuit 518, the initialization of the re-timer 516 may have possibly been in a Polling state or in any of the succeeding states. Accordingly, the control circuit 518 issues a Hot Reset instruction to the re-timer 516 (step 904) and then cancels the Hot Reset instruction (step 905).

Upon receipt of a Hot Reset instruction, the re-timer 516 transitions from the current state to the Hot Reset state, and then, upon the cancelling of the Hot Reset instruction, the re-timer 516 transitions from the Hot Reset state to the Detect state. Thus, performing the processes of steps 904 and 905 may ensure that the re-timer 516 is stopped in the Detect state.

The processes of steps 906 to 909 in FIG. 9 are similar to the processes of steps 703 to 706 in FIG. 7.

When the control circuit 518 detects in step 909 that initialization of the connector circuit 517-2 has been completed (Yes in step 909), the control circuit 518 cancels the stop instruction to the re-timer 516 (step 910).

Accordingly, the re-timer 516, which was stopped in the Detect state, continues initialization and finally transitions to the L0 state, and the re-timer 516 may start data communication via the connector circuits 517-1 and 517-2.

The controlling process by the control circuit 525 of the expansion apparatus 502 is similar to the controlling process by the control circuit 518 of the main-body apparatus 501.

Such a controlling process allows initialization of the re-timer to progress before initialization of the connector circuit is completed. Thus, the time required for the controlling process may be shorter than in the case of FIG. 7, thereby activating the information processing apparatus sooner.

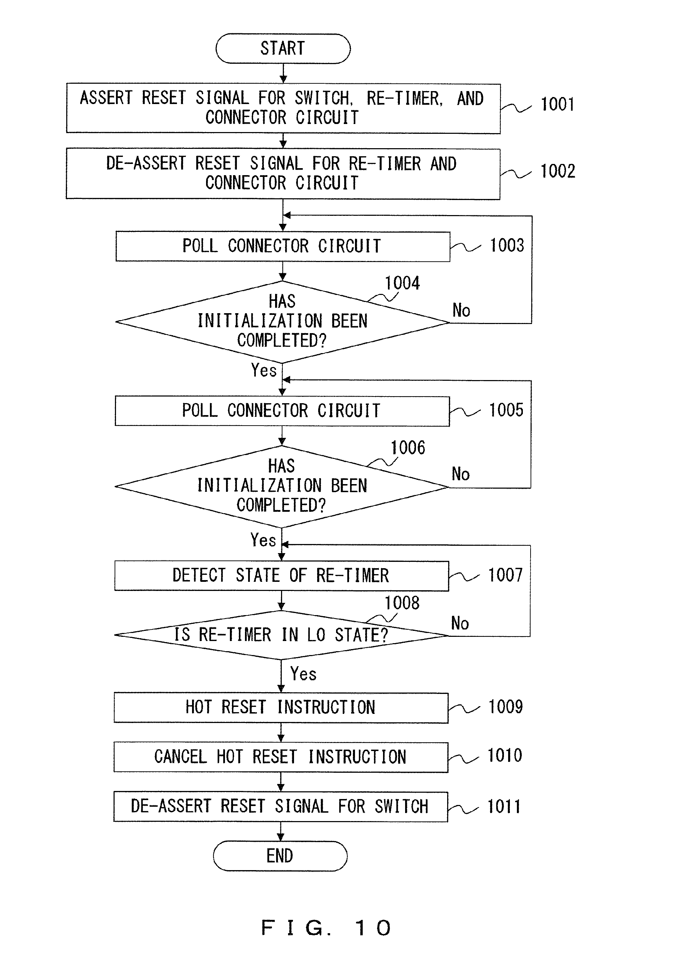

FIG. 10 is a flowchart illustrating an example of another controlling process, wherein the control circuit 518 of the main-body apparatus 501 controls initialization of the re-timer 516 using state transitions at PCIe.

First, the control circuit 518 asserts a reset signal for the switch 514, the re-timer 516, and the connector circuits 517-1 and 517-2 (step 1001). Then, the control circuit 518 de-asserts a reset signal for the re-timer 516 and the connector circuits 517-1 and 517-2 (step 1002).

Accordingly, the re-timer 516 and the connector circuits 517-1 and 517-2 start initialization.

In this case, if the control circuit 518 de-asserts a reset signal for the switch 514, initialization of the switch 514 starts, and the initialization may possibly be completed. Upon completion of initialization of the switch 514 and the re-timer 516, the CPU 511 recognizes the L0 state of the re-timer 516 and thus can start data communication via the RC 513. Thus, in the process of performing data communication, a Hot Reset instruction needs to be issued to the re-timer 516. Accordingly, to prevent data communication from unintentionally starting, the control circuit 518 does not de-assert a reset signal for the switch 514 in step 1002.

The processes of steps 1003 to 1006 in FIG. 10 are similar to the processes of steps 703 to 706 in FIG. 7.

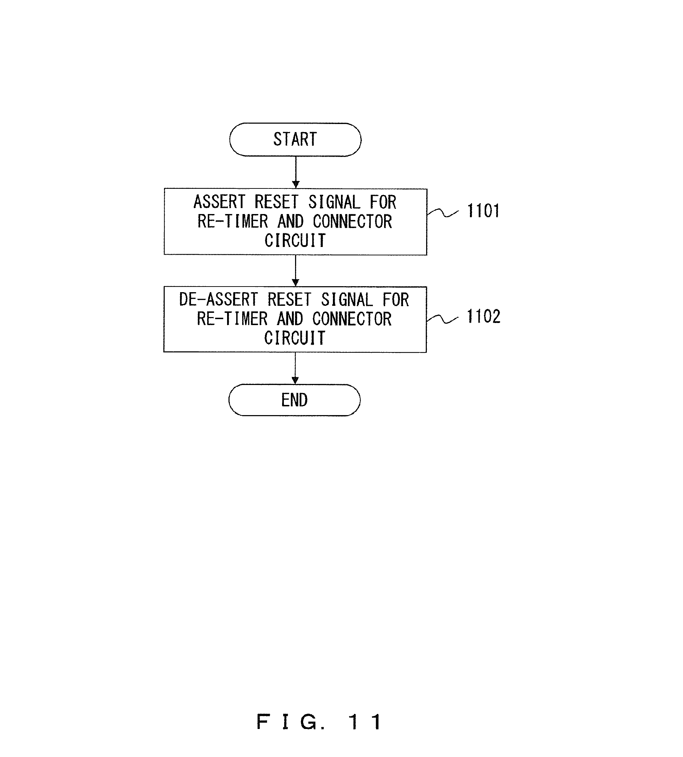

Meanwhile, the control circuit 525 of the expansion apparatus 502 does not perform the controlling process in FIG. 10 but performs a controlling process such as the one in FIG. 11. The processes of steps 1101 and 1102 in FIG. 11 are similar to the processes of steps 901 and 902 in FIG. 9. In the controlling process in FIG. 11, the control circuit 525 does not stop the re-timer 522 of the expansion apparatus 502 in the Detect state but causes the re-timer 522 to continue initialization.

When the control circuit 518 detects in step 1006 of FIG. 10 that initialization of the connector circuit 517-2 has been completed (Yes in step 1006), the control circuit 518 detects the state of the re-timer 516 (step 1007). The control circuit 518 checks whether or not the re-timer 516 is in the L0 state (step 1008).

Since the re-timer 516 has already started initialization, the re-timer 516 is assumed to be in any of the Detect state, the Polling state, the Configuration state, and the L0 state.

When the re-timer 516 is in the L0 state (Yes in step 1008), the re-timer 516 may complete initialization before the connector circuit 517-2 completes initialization. Accordingly, the control circuit 518 issues a Hot Reset instruction to the re-timer 516 (step 1009).

In the meantime, when the re-timer 516 is in the L0 state, it is also determined that initialization of the re-timer 522, which is a communication partner of the re-timer 516, has been completed. Thus, communication can be performed via at least some lanes between the re-timers 516 and 522. Accordingly, the control circuit 518 also issues a Hot Rest instruction to the re-timer 522 via a lane with which communication can be performed.

Next, the control circuit 518 cancels the Hot Reset instruction to the re-timers 516 and 522 (step 1010). Accordingly, the re-timers 516 and 522 are put back in the Detect state and again perform the processes that follow the Detect state so as to complete initialization.

Next, the control circuit 518 de-asserts a reset signal for the switch 514 (step 1011). Thus, the switch 514 starts initialization. When initialization of the switch 514 and the re-timer 516 is completed, the CPU 511 recognizes the L0 state of the re-timer 516 so that the main-body apparatus 501 and the expansion apparatus 502 can start data communication via the connector circuits 517-1 and 517-2.

In accordance with such a controlling process, after initialization of both of the connector circuits is completed, the CPU 511 may recognize a state that allows data communication to be performed via these connector circuits, thereby starting the data communication.

In the controlling process in FIG. 10, the control circuit 518 may stop the switch 514 in the Detect state and may cause the control circuit 518 to continue initialization after initialization of the connector circuits 517-1 and 517-2 is completed.

Instead of controlling initialization of the switch 514, the control circuit 518 may control initialization of the RC 513 or the CPU 511.

To control initialization of the RC 513, the control circuit 518 may cause the RC 513 to start initialization after initialization of the connector circuits 517-1 and 517-2 is completed. Alternatively, the control circuit 518 may stop the RC 513 in the Detect state and may cause the RC 513 to continue initialization after initialization of the connector circuits 517-1 and 517-2 is completed.

To control initialization of the CPU 511, the control circuit 518 may reset the CPU 511 after initialization of the connector circuits 517-1 and 517-2 is completed.

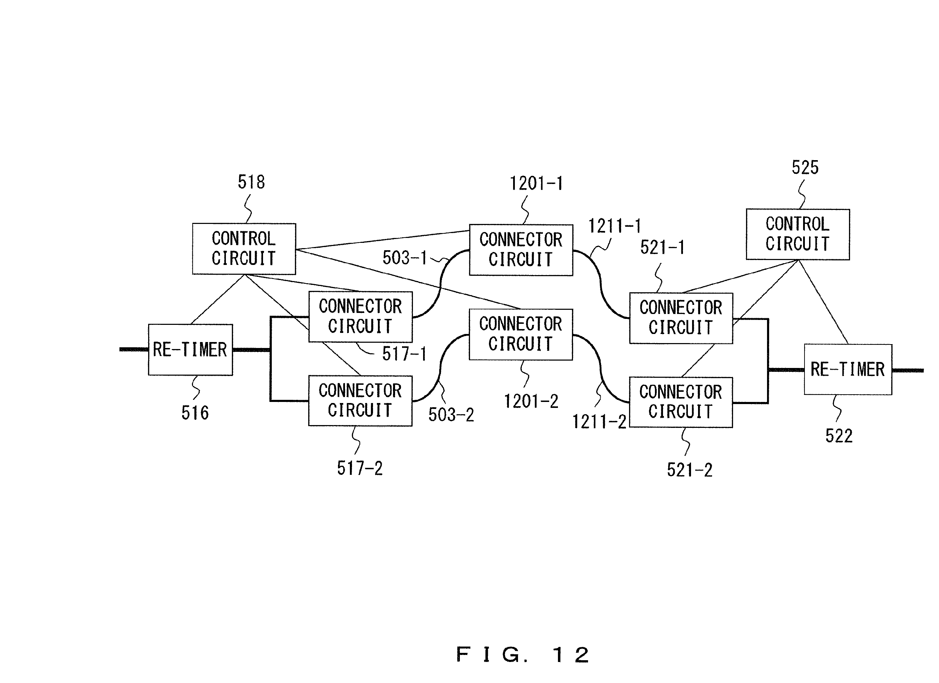

FIG. 12 illustrates an exemplary configuration of the information processing apparatus 201 in FIG. 5, wherein connector circuits 1201-1 and 1201-2 are provided between the main-body apparatus 501 and the expansion apparatus 502.

In the configuration in FIG. 12, the connector circuits 517-i (i=1, 2) and 1201-i are connected via the cable 503-i, and the connector circuits 1201-i and 521-i are connected via the cable 1211-i. The re-timer 516 is connected to the switch 514 in FIG. 5, and the re-timer 522 is connected to the switch 523 in FIG. 5.

In this case, the control circuit 518 performs any of the controlling processes illustrated in FIG. 6 to FIG. 10 on the connector circuits 517-1, 517-2, 1201-1 and 1201-2. Meanwhile, the control circuit 525 performs any of the controlling processes illustrated in FIG. 6 to FIG. 9 and the controlling process illustrated in FIG. 11 on the connector circuits 521-1 and 521-2.

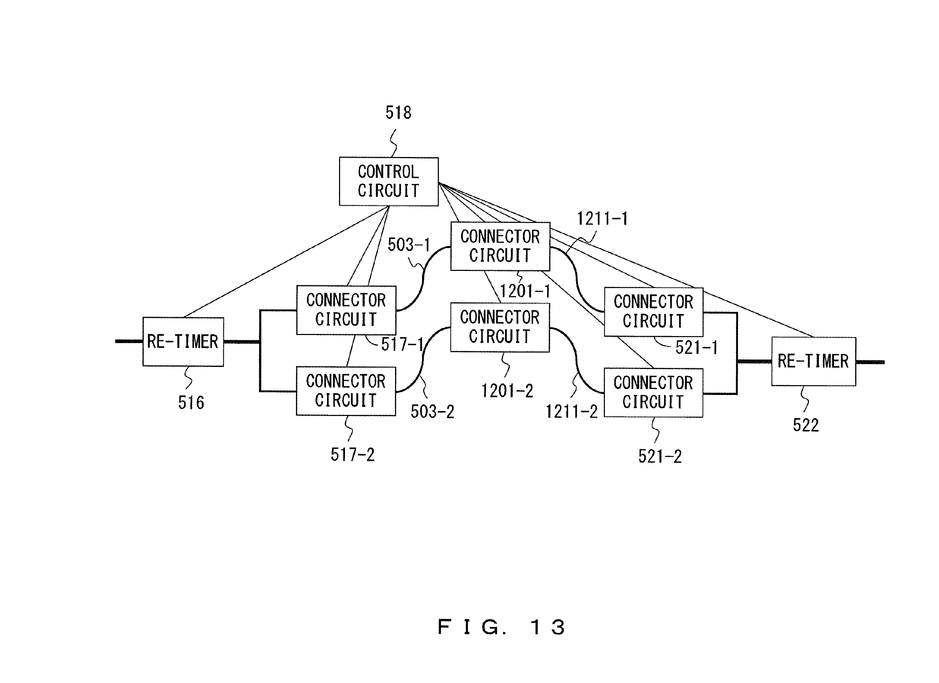

FIG. 13 illustrates an example of the configuration illustrated in FIG. 12 with the control circuit 525 omitted. In this case, the control circuit 518 performs any of the controlling processes illustrated in FIG. 6 to FIG. 10 on the connector circuits 517-1, 517-2, 1201-1, 1201-2, 521-1 and 521-2.

In addition, the control circuit 518 not only controls the communication circuit of the main-body apparatus 501 but also the communication circuit of the expansion apparatus 502. Thus, both the re-timers 516 and 522 are controlled in step 604 of FIG. 6, steps 701 and 707 of FIG. 7, and steps 801 and 809 of FIG. 8. Both the re-timers 516 and 522 are also controlled in steps 901 to 905 and step 910 in FIG. 9 and steps 1001, 1002, 1009 and 1010 in FIG. 10.

The configurations of the information processing apparatus 201 illustrated in FIG. 5, FIG. 12 and FIG. 13 are mere examples, and some elements may be omitted or changed in accordance with a process performed by the information processing apparatus 201. As an example, the built-in device 515 may be omitted. The main-body apparatus 501 and the expansion apparatus 502 may be connected to each other via three or more cables or may be connected via a plurality of radio links instead of a plurality of cables.

Even when a limited number of lanes are included in one cable, serial communication that uses many lanes may be achieved by increasing the number of cables. As an example, for implementation of an x32 link, the main-body apparatus 501 and the expansion apparatus 502 may be connected using eight parallel-connected x4-link cables. For use of an x1-link cable, the main-body apparatus 501 and the expansion apparatus 502 may be connected using as many parallel-connected cables as the number of lanes.

The flowcharts illustrated in FIG. 6 to FIG. 11 are mere examples, and some of the processes may be omitted or changed in accordance with the configuration or condition of the information processing apparatus 201. As an example, in the controlling processes of FIG. 6, FIG. 9 and FIG. 10, the control circuit may halt polling when a certain time period elapses after the polling has started, as in the case of the controlling process illustrated in FIG. 8.

Using a method that does not poll the initialization completion register of a connector circuit, the control circuit may detect whether or not initialization of the connector circuit has been completed. As an example, when the control circuit and the connector circuit have a communications capability, the control circuit may transmit a query message to the connector circuit, and the connector circuit may transmit a response message to the control circuit. In this case, the control circuit detects whether or not initialization of the connector circuit has been completed according to the response message from the connector circuit.

## Claims

1. An information processing apparatus comprising:
a communication circuit (211, 214, 411, 413, 511, 513, 514, 516, 522, 523) configured to perform data communication that is at least one of data transmission and data reception;
a plurality of interface circuits (212-1 to 212-N, 213-1 to 213-N, 412-1 to 412-N, 517-1, 517-2, 521-1, 521-2, 1201-1, 1201-2) connected to the communication circuit and each connected to each of a plurality of communication lines; and
a control circuit (215, 216, 414, 518, 525) configured to perform control to initialize the plurality of interface circuits, to detect whether or not initialization of each of the plurality of interface circuits has been completed, and to control the communication circuit so as to start data communication via the plurality of interface circuits when the control circuit detects that initialization of all of the plurality of interface circuits has been completed.

2. The information processing apparatus according to claim 1, wherein
when initialization of one interface circuit of the plurality of interface circuits is not completed within a certain time period, the control circuit controls the communication circuit so as to start data communication via the plurality of interface circuits other than the one interface circuit.

3. The information processing apparatus according to claim 1 or 2, wherein
the control circuit stops the communication circuit in a state in which the communication circuit confirms an electrical connection to a communication partner, and
when the control circuit detects that initialization of all of the plurality of interface circuits has been completed, the control circuit controls the communication circuit so as to cancel stopping in the state in which the communication circuit confirms the electrical connection.

4. The information processing apparatus according to claim 1 or 2, further comprising:
a processor connected to the communication circuit,
wherein
the control circuit controls the communication circuit so as to cause the processor to not recognize a state in which communication is performed via the plurality of interface circuits, and
when the control circuit detects that initialization of all of the plurality of interface circuits has been completed, the control circuit controls the communication circuit to cause the processor to recognize the state in which communication is performed via the plurality of interface circuits.

5. A controlling method comprising:
performing control to initialize a plurality of interface circuits each connected to each of a plurality of communication lines and connected to a communication circuit configured to perform communication that is at least one of data transmission and data reception (301, 601, 701 to 702, 801 to 802, 901 to 902, 1001 to 1002);
detecting whether or not initialization of each of the plurality of interface circuits has been completed (302, 602 to 603, 703 to 706, 803 to 808, 906 to 909, 1003 to 1006); and
controlling the communication circuit so as to start data communication via the plurality of interface circuits when completion of initialization of all of the plurality of interface circuits has been detected (303, 604, 707, 809, 910, 1009 to 1011).
